# EUROPÄISCHE PATENTSCHRIFT

(11) **EP 3 024 675 B1**
(45) Veröffentlichungstag und Bekanntmachung des Hinweises auf die Patenterteilung: **21.03.2018**
(21) Anmeldenummer: 14738473.9
(22) Anmeldetag: 08.07.2014
(51) Int. Cl.: B60G 17/027, B62K 25/04, B60G 17/016, B60G 15/06, B60G 11/16

(54) **FEDERBEIN FÜR EIN FAHRZEUGRAD SOWIE VERFAHREN ZU DESSEN STEUERUNG**
SUSPENSION STRUT FOR A VEHICLE WHEEL AND METHOD FOR THE CONTROL THEREOF
JAMBE DE FORCE DESTINÉE À UNE ROUE DE VÉHICULE ET PROCÉDÉ DE COMMANDE ASSOCIÉ

(30) Priorität: 25.07.2013 DE 102013214540
(43) Veröffentlichungstag der Anmeldung: 01.06.2016
(73) Patentinhaber: Bayerische Motoren Werke Aktiengesellschaft, 80809 München (DE)
(72) Erfinder: KUHLENDAHL, Jan, 80807 München (DE)
(86) Internationale Anmeldenummer: PCT/EP2014/064529
(87) Internationale Veröffentlichungsnummer: WO 2015/010887

(56) Entgegenhaltungen:
- EP-A1- 1 790 506
- EP-A1- 2 712 797
- WO-A1-2010/079093
- DE-A- 3 930 966
- DE-A1- 10 239 140
- DE-A1- 10 353 025
- DE-A1- 19 521 746
- DE-A1- 19 744 757
- DE-A1- 19 922 745
- DE-A1-102008 006 051
- DE-A1-102009 045 051
- JP-A- H05 213 255
- JP-A- H06 143 969
- JP-A- 2001 088 528
- JP-U- H0 499 103
- US-A- 4 568 101
- US-A1- 2011 101 632

## Beschreibung

Die Erfindung betrifft ein Federbein für ein Fahrzeugrad, insbesondere für ein Hinterrad eines Motorrades, mit einer über einen Kolben hydraulisch verstellbaren Federbasis. Ferner betrifft die Erfindung ein Verfahren zur Steuerung des Federbeins.

Aus den aktuellen Motorrädern der Anmelderin sind bereits elektronisch gesteuerte Federbeine bekannt. Diese werden im Markt unter der Bezeichnung ESA-System (electronic suspension adjustment) angeboten. Das bekannte System bietet bereits eine Auswahl unterschiedlicher Feder-Dämpfer-Charakteristiken, wie sie beispielsweise in der DE 199 22 745 A1 beschrieben sind. Diese Schrift offenbart eine Radaufhängungsvorrichtung für Motorräder, bei der über eine manuell verstellbare Auswahleinheit und/oder in Abhängigkeit von erfassten Betriebsparametern die Dämpfungskraft und/oder die Federkraft des Federbeins verstellbar ist. Es ist vorgesehen, über einen elektrischen Schrittmotor die bei einem konventionellen Federbein vorhandenen Einstellmittel zu betätigen und zu verstellen.

Ein Verfahren zur Steuerung und/oder Regelung des Feder- und/oder Dämpferverhaltens einer Feder-Dämpfereinrichtung ist ferner aus der DE 10 2008 006 051 A1 bekannt.

Weitere Feder-Dämpfer-Systeme sind aus der DE 39 30 966 A, JP H04 99103 U, US 2011/101632 A1, DE 102 39 140 A1, DE 197 44 757 A1, JP H06 143969 A, DE 10 2009 045051 A1 und der DE 103 53 025 A1 bekannt.

Bei anderen Herstellern erfolgt die Federbasisverstellung über einen Hakenschlüssel bzw. manuell über ein Handrad, wobei durch eine Drehbewegung ein Hydraulikgeberkolben auf einer Gewindespindel und der Nehmerkolben, auf dem die Feder sitzt, verschoben werden. Bei dem auf die Anmelderin zurückgehenden ESA-System wirkt ein Elektromotor auf ein Schneckengetriebe, das über eine Gewindehubspindel den Hydraulikgeberkolben und somit den Hydrauliknehmerkolben, auf dem die Feder sitzt, versetzt.

Bei der manuellen Betätigung sind hohe Bedienkräfte nötig, um die passende Einstellung bzw. Verstellung der Federbasis zu realisieren. Der hierfür notwendige Zeitaufwand ist aufgrund nicht immer sichergestellter einfacher Zugänglichkeit ebenfalls problematisch. Die elektronisch gesteuerte und über einen Einstellknopf am Lenker komfortabel bedienbare Lösung hat sich in der Praxis vielfach bewährt, jedoch kann das System weiter vereinfacht und hinsichtlich der Langlebigkeit verbessert werden. Auch ist zu berücksichtigen, dass die verwendete Gewindehubspindel sowie das Schneckengetriebe einen schlechten Wirkungsgrad aufweisen.

Vor diesem Hintergrund ist es Aufgabe der vorliegenden Erfindung, ein Federbein und eine Verfahren zu dessen Steuerung bereitzustellen, das einfach und schnell zu bedienen ist, eine verbesserte Langlebigkeit und einen höheren Wirkungsgrad aufweist.

Diese Aufgaben werden gelöst durch die Merkmalskombination gemäß Patentanspruch 1 und Patentanspruch 6.

Erfindungsgemäß ist ein Federbein für ein Fahrzeugrad entsprechend des Anspruchs 1bereitgestellt

Mit dieser Lösung werden bisher notwendige Teile wie die Gewindehubspindel und das Schneckengetriebe obsolet. Der Wirkungsgrad des Federbeins ist durch die unmittelbare hydraulische Wirkung der Hydraulikpumpe auf dem Kolben (Nehmerkolben des Federbeins) verbessert. Die Vorzüge des elektronisch gesteuerten Systems bleiben weiterhin erhalten und werden dahingehend verbessert, dass die Betätigung des Kolbens unmittelbar über den durch die Hydraulikpumpe erzeugten Hydraulikdruck erfolgt. Insbesondere auch in einem Bereich der Endstellung des Kolbens wird über die erfindungsgemäße druckbasierte Lösung sichergestellt, dass der Kolben auch nach längeren Stillstandszeiten immer beweglich bleibt. Ferner ist günstig, dass zum Einsatz der Erfindung keine maßgeblichen Änderungen an bisher verwendeten Federbeinen nötig werden. Insbesondere ist bei der verwendeten Hydraulikeinheit der hydraulische Anschluss anzupassen.

Die erfindungsgemäß verwendete Hydraulikpumpe ist einfach wirkend, wobei eine einfach wirkende Hydraulikpumpe in vorteilhafter Weise in der Lage ist, einen Druck auf den Kolben aufzubauen und diesen über vergleichsweise lange Zeiträume aufrecht zu erhalten. In Verbindung mit einer einfach wirkenden Hydraulikpumpe wird erfindungsgemäß ein 2-2-Wegeventil vorgesehen, welches über den Elektromotor geöffnet und geschlossen wird. Das 2-2-Wegeventil kann die notwendige Dichtheit des Systems gewährleisten.

Grundsätzlich kann das Federbein mit einer eigenständigen Hydraulikpumpe ausgebildet werden, es ist jedoch auch möglich, vorhandene Druck erzeugende Systeme, wie die ABS-Pumpe, zu integrieren. Zusätzlich ist in einer günstigen Ausführung vorsehbar, die Verstelleinheit in die bereits vorhandene ABS-Pumpe zu integrieren, wobei die ABS-Pumpe lediglich mit einem zusätzlichen Druckanschluss zu versehen ist. Die Steuerung erfolgt in jedem Fall über dasselbe Steuergerät. Somit wird ein ökonomisches und gewichtsreduziertes System gewährleistet.

Die Erfindung umfasst auch das Verfahren zur Einstellung der Federbasis des Federbeins, wobei vorgesehen ist, dass der über das Steuergerät geregelte Elektromotor die Hydraulikpumpe derart steuert, dass dabei ein auf den Kolben wirkenden Druck zur variablen und vordefinierbaren Einstellung der Federbasis des Federbasis erzeugt wird. Über das Steuergerät wird an den Elektromotor das entsprechende Signal geliefert, dass eine Verstellung der Federbasis gewünscht ist und eine Drehrichtung vorgegeben. Bei der Verwendung eines nur in eine Richtung drehenden Elektromotors ist die Drehrichtung vorbestimmt. Über den Elektromotor und damit verbundene Einwirkung auf die Hydraulikpumpe wird der Druck auf den Kolben bestimmt, der wiederum seine Stellung im Federbein und somit die Federbasis festlegt.

Sowohl bei dem Federbein als auch dem Verfahren zu dessen Steuerung/Einstellung ist günstig, der Elektromotor über ein Steuergerät fahrzustandsabhängige Signale zur Steuerung der Hydraulikpumpe erhält. Somit kann beispielsweise eine geschwindigkeitsabhängige Steuerung und Einstellung des Kolbens erfolgen, wobei vordefinierte Steuerprogramme im Steuergerät hinterlegt sein können, die beispielsweise ein Absenken des Motorrads im Stand vorsehen, ohne dass der Fahrer dies jedes Mal erneut über einen Bedienknopf anfordern muss.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: einen Hydraulikplan einer ersten Ausführung des erfindungsgemäßen Federbeins; und
- Fig. 2: einen Hydraulikplan einer zweiten Ausführung des Federbeins.

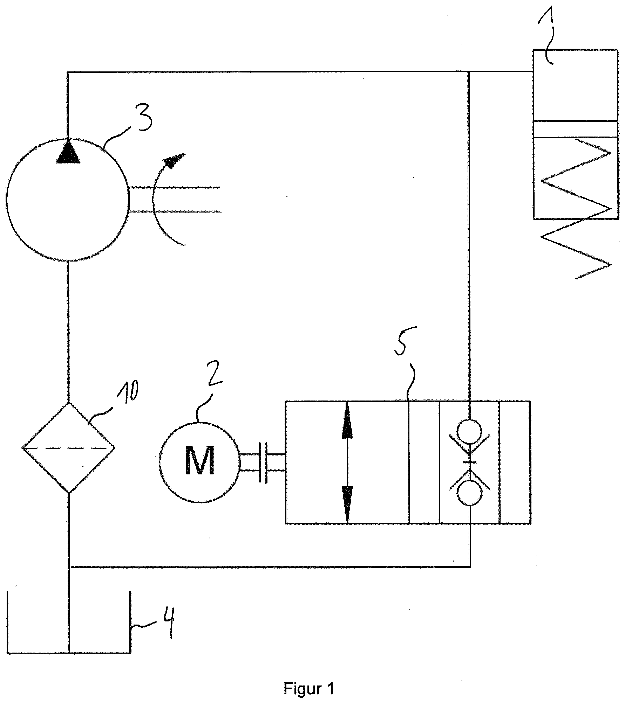

In Figur 1 ist das Hydrauliksystem (Hydraulikplan) des Federbeins dargestellt, wobei auf den Kolben 1 (Nehmerkolben) ein von der Hydraulikpumpe 3 erzeugter hydraulischer Druck wirkt, um die Federbasis des Federbeins zu verstellen. Die Hydraulikpumpe 3 saugt Hydrauliköl über einen Filter 10 aus einem Tank 4 und leitet dieses unmittelbar an den Kolben 1 weiter. Durch ein über einen Elektromotor 2 gesteuertes 2-2-Wegeventil 5 wird die notwendige Dichtheit des Systems gewährleistet. Das 2-2-Wegeventil 5 wird mittels des Elektromotors 2 geöffnet und geschlossen. Die gezeigte Hydraulikpumpe 3 ist einfach wirkend ausgebildet und kann somit den auf den Kolben 1 wirkenden Druck unabhängig von zusätzlichen Bauteilen aufrecht erhalten.

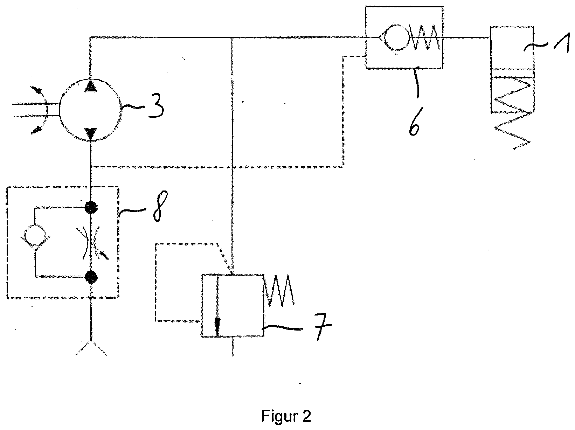

In Fig. 2 ist eine alternative, nicht zu der Erfindung gehörige Ausführung anhand eines Hydraulikplans dargestellt. Die grundsätzliche erfindungsgemäße Wirkung auf den Kolben 1 ist identisch zu dem Aufbau aus Fig. 1. Jedoch sind Maßnahmen zur Druckerzeugung, Druckaufrechterhaltung und Abdichtung des Systems in alternativer Form bereitgestellt. Zwischen der zweifach wirkenden Hydraulikpumpe 3 ist ein Rückschlagventil 6 vorgesehen, welches über eine Blende 8 angesteuert wird. Die Begrenzung des Maximaldrucks wird über ein Druckbegrenzungsventil 7 erreicht.

In beiden Ausführungen ist der Aufbau des Federbeins, insbesondere des Kolbens 1 im Zylinder des Federbeins nicht gesondert gegenüber dem im System herrschenden Maximaldruck abzusichern, da die Bauteile für die im System wirkenden hydraulischen Drücke ausgelegt sind.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise kann die Verstelleinheit in eine bereits vorhandene ABS-Pumpe integriert werden.

## Patentansprüche

1. Federbein für ein Fahrzeugrad, insbesondere für ein Hinterrad eines Motorrades, mit einer über einen Kolben (1) hydraulisch verstellbaren Federbasis, wobei eine über einen Elektromotor (2) gesteuerte Hydraulikpumpe (3) vorgesehen ist, die einen auf den Kolben (1) wirkenden hydraulischen Druck zur variablen und vordefinierbaren Einstellung der Federbasis erzeugt, und ein über den Elektromotor (2) zu öffnendes und schließbares 2-2-Wegeventil (5) vorgesehen ist, **dadurch gekennzeichnet, dass** der Elektromotor (2) das 2-2-Wegeventil (5) durch eine Nocke betätigt und als nur in einer Richtung drehbar ausgebildet ist.

2. Federbein nach Anspruch 1, **dadurch gekennzeichnet, dass** die Hydraulikpumpe (3) einfach wirkend ist.

3. Federbein nach zumindest einem der vorigen Ansprüche, **dadurch gekennzeichnet, dass** die Hydraulikpumpe (3) Hydraulikflüssigkeit aus einem Tank (4) saugt und unmittelbar an den Kolben (1) weiterleitet.

4. Federbein nach zumindest einem der vorigen Ansprüche, **dadurch gekennzeichnet, dass** als Hydraulikpumpe eine ABS-Pumpe verwendet wird.

5. Federbein nach zumindest einem der vorigen Ansprüche, **dadurch gekennzeichnet, dass** der Elektromotor (2) über ein Steuergerät fahrzustandsabhängige Signale zur Steuerung der Hydraulikpumpe (3) erhält.

6. Verfahren zur Steuerung des Federbeins nach zumindest einem der vorigen Ansprüche, **dadurch gekennzeichnet dass** der über ein Steuergerät geregelte Elektromotor (2) die Hydraulikpumpe (3) steuert und dabei einen auf den Kolben (1) wirkenden Druck zur variablen und vordefinierbaren Einstellung der Federbasis des Federbeins erzeugt.

## Claims

1. A suspension strut for a vehicle wheel, especially for a rear wheel of a motorbike, having a spring base which can be adjusted hydraulically by a piston (1), wherein a hydraulic pump (3) is provided which is controlled by an electric motor (2) and which generates a hydraulic pressure, acting on the piston (1), for the variable and predefinable adjustment of the spring base, and a 2/2-way valve (5) which is to be opened and is closable by the electric motor (2) is provided, **characterised in that** the electric motor (2) actuates the 2/2- way valve (5) by a cam and is configured to be rotatable in only one direction.

2. A suspension strut according to claim 1, **characterised in that** the hydraulic pump (3) is a single-action pump.

3. A suspension strut according to at least one of the preceding claims, **characterised in that** the hydraulic pump (3) draws hydraulic fluid by suction out of a tank (4) and conveys it directly to the piston (1).

4. A suspension strut according to at least one of the preceding claims, **characterised in that** an ABS pump is used as the hydraulic pump.

5. A suspension strut according to at least one of the preceding claims, **characterised in that** via a control device, the electric motor (2) receives signals which are dependent on the running state to control the hydraulic pump (3).

6. A method for controlling the suspension strut according to at least one of the preceding claims, **characterised in that** the electric motor (2), controlled by a control device, controls the hydraulic pump (3) and in so doing generates a pressure acting on the piston (1) for the variable and predefinable adjustment of the spring base of the suspension strut.

## Revendications

1. Jambe de suspension d'une roue de véhicule, en particulier de la roue arrière d'une moto, ayant une précharge réglable hydrauliquement par l'intermédiaire d'un piston (1), jambe de suspension dans laquelle il est prévu une pompe hydraulique (3) commandée par un moteur électrique (2) qui produit une pression hydraulique agissant sur le piston (1) pour permettre un réglage variable et pouvant être prédéfini de la précharge, ainsi qu'une soupape à 2-2 voies (5) pouvant être fermée et ouverte par le moteur électrique (2),
**caractérisé en ce que**
le moteur électrique (2) actionne la soupape à 2-2 voies (5) par l'intermédiaire d'une came et n'est mobile en rotation que dans une direction.

2. Jambe de suspension conforme à la revendication 1,
**caractérisée en ce que**
la pompe hydraulique (3) et à simple effet.

3. Jambe de suspension conforme à au moins l'une des revendications précédentes,
**caractérisée en ce que**
la pompe hydraulique (3) aspire du fluide hydraulique dans un réservoir (4) et le transfère directement au piston (1).

4. Jambe de suspension conforme à au moins l'une des revendications précédentes,
**caractérisée en ce que**
la pompe hydraulique est une pompe ABS.

5. Jambe de suspension conforme à au moins l'une des revendications précédentes,
**caractérisée en ce que**
le moteur électrique (2) reçoit, par l'intermédiaire d'un appareil de commande des signaux dépendants de l'état de roulement permettant de commander la pompe hydraulique (3).

6. Procédé de commande d'une jambe de suspension conforme à au moins l'une des revendications précédentes,
**caractérisé en ce que**
le moteur électrique (2) régulé par l'intermédiaire d'un appareil de commande, commande la pompe hydraulique (3) et produit une pression agissant sur le piston (1) pour permettre un réglage variable et pouvant être prédéfini de la précharge de la jambe de suspension.
